# EUROPEAN PATENT APPLICATION

(11) **EP 1 355 369 A1**
(43) Date of publication of application: **22.10.2003**
(21) Application number: 02715870.8
(22) Date of filing: 22.01.2002
(51) Int. Cl.: H01M 6/22, C08L 25/12, C08L 55/02

(54) **ELECTOLYTE-ABSORPTIVE POLYMER AND ITS PRODUCTION METHOD, AND CELL USING THE POLYMER**

(30) Priority: 22.01.2001 JP 2001001376; 22.01.2001 JP 2001001377; 13.03.2001 JP 2001007107
(71) Applicant: Sony Corporation, Tokyo 141-0001 (JP)
(72) Inventor: WATANABE, Haruo c/o SONY CORPORATION, Tokyo 141-0001 (JP); INAGAKI, Yasuhito c/o SONY CORPORATION, Tokyo 141-0001 (JP); NOGUCHI, Tsutomu c/o SONY CORPORATION, Tokyo 141-0001 (JP)
(74) Representative: Müller, Frithjof E., Dipl.-Ing.
(86) International application number: JP0200434
(87) International publication number: WO02058175

(57) **Abstract**

The present invention is relative to a liquid electrolyte absorbing polymer which liquid electrolyte absorbing polymer is comprised of a water-insoluble polymer and of hydrophilic polar groups introduced into the water-insoluble polymer. The liquid electrolyte absorbing polymer is prepared by introducing hydrophilic polar groups to the water-insoluble polymer. A cell is formed using this liquid electrolyte absorbing polymer in dried state and the electrolyte in dried state as constituent units. The liquid electrolyte absorbing polymer and the cell employing the liquid electrolyte absorbing polymer are inexpensive, high in safety and are capable of absorbing plural sorts of the electrolytes simultaneously. The cell employing the liquid electrolyte absorbing polymer of the present invention is free from leakage or vaporization of the liquid electrolyte to outside the cell system and has prolonged shell life until use.

## Description

### Technical Field

This invention relates to a liquid electrolyte absorbing polymer, comprised of a water-insoluble polymer, having hydrophilic polar groups introduced thereto, and a method for producing the polymer. The present invention also relates to a method for producing a water-added cell comprised of a dried product of a water-insoluble polymer having hydrophilic polar groups introduced thereto and a dried product of the electrolyte, and to the water-added cell.

More particularly, the present invention relates to a cell comprised of the combination of a modified copolymer, a cell precursor made up by a cathode and an anode and a dielectric liquid, to this cell precursor and a method for producing the cell. The modified copolymer is comprised of a copolymer having acrylonitrile on one hand and at least one of styrene and/or a conjugated diene, on the other hand, as constituent units, and of acidic groups introduced thereto.

### Background Art

The conventional liquid electrolyte absorbing polymers are routinely manufactured by addition of a cross-linkable monomer to a monomer exhibiting solubility with respect to a liquid electrolyte of interest following by polymerization. In this case, the monomer as a feedstock is mostly rather expensive. Moreover, the feedstock monomer is sometimes partially left unpolymerized in the product even after polymerization. Thus, the known liquid electrolyte absorbing polymers pose a problem in cost and in safety. The state-of-the-art liquid electrolyte absorbing polymers are designed and manufactured only with absorption of certain specified liquid electrolytes as a target so that its liquid absorbing performance for liquid electrolytes other than the specified liquid electrolytes is lowered drastically. In practical aspects, there are many cases wherein it is required for the liquid electrolyte absorbing polymers to be able to absorb plural sorts of the liquid electrolytes simultaneously. So, a liquid electrolyte absorbing polymers having a wide field of application has been strongly desired.

On the other hand, the yield of products employing general-purpose plastics, in particular plastics having aromatic rings or conjugated ions in the molecules, for example, ABS (acrylonitrile- butadiene- styrene) polymer, SAN (styrene-acrylonitrile) polymer, polyacrylonitrile- butadiene or polyethylene terephthalate (PET), is increasing and, in keeping up with it, the produced amount of the waste material comprised of these materials tends to be increased. By reason of the growing interest in the protection of global environment, there is an increasing need towards effective utilization of the waste materials.

Under such situation, further increasingthe usage for re-utilization is demanded, such that studies and investigations in modifyingthe materials into higher added-value products have been desired.

Meanwhile, the polymer-based waste materials are disposed of roughly by three types of techniques, namely land-filling, incineration and re-melting. Of these, land-filling and incineration account for approximately 90% of the total amount of disposal of the waste material, meaning that most of the waste material is not re-used.

As the method of recycling the polymer waste material, such a method of melting by heating and re-molding is routinely used, insofar as the thermoplastic resin is concerned. In this case, a lot of problems are presented, such as thermal deterioration, for example the lowering of the molecular weight or oxidation of the polymer, admixture of foreign matter, such as dust and dirt, or admixture of resins containing various colorants which leads to the necessity of color matching. That is, in recycling polymer waste materials of the general-purpose plastics by heating or melting, processing techniques or costs pose serious impediments.

The status-of-the-art cell is routinely comprised of electrodes immersed in an liquid electrolyte. In this case, there are raised a variety of problems, such as leakage or evaporation of the liquid electrolyte to outside the cell system, or shortened preservation time until actual use of the cell due to corrosion of the electrode part caused in turn by the liquid electrolyte directly contacting with the electrodes. For this reason, such a cell in which the liquid electrolyte is emitted to outside the cell system in a lesser quantity and which has a longer preservation time has been desired.

Additionally, the yield of productivity employing general-purpose plastics, in particular plastics having aromatic rings or conjugated ions in the molecules, for example, ABS (acrylonitrile- butadiene- styrene) polymer, SAN (styreneacrylonitrile) polymer, polyacrylonitrile- butadiene or polyethylene terephthalate (PET), is increasing and, in keeping up with it, the produced amount of the waste material comprised of these materials tends to be increased. By reason of the growing interest in the maintenance of global environment, there is an increasing need towards effective utilization of the waste materials.

Under such situation, further increasing the range of usage for re-utilization is demanded, such that studies and investigations in modifying the materials into higher added-value products have been desired.

Meanwhile, the polymer-based waste materials roughly are disposed of by three types of techniques, namely land-filling, incineration and re-melting. Of these, land-filling and incineration account for approximately 90% of the total amount of disposal of the waste material, meaning that most of the waste material is not re-used.

As the method of recycling the polymer waste material, such a method of melting by heating and re-molding is routinely used, insofar as the thermoplastic resin is concerned. In this case, a lot of problems are presented, such as thermal deterioration (for example the lowering of the molecular weight or oxidation of the polymer), admixture of foreign matter, such as dust and dirt, or admixture of resins containing various colorants which leads to the necessity of color matching. That is, in recycling polymer waste materials of the general-purpose plastics by heating or melting, processing techniques or costs pose serious impediments.

Among the resins containing acrylonitrile and styrene or a conjugated diene as constituent units, there are polystyrene based resins, exemplified by an ABS (acrylonitrile- butadiene- styrene) resin, a SAN (styrene- acrylonitrile) resin or an AAS (acrylonitrile- acrylate- styrene) resins, and synthetic rubber, such as NBR (acrylonitrile- butadiene) rubber. These resins are relatively inexpensive and, in particular, the polystyrene based resins are superior in toughness, dimensional stability or workability, and hence are used in abundant quantities as resin materials for covers or casings for variegated use, and for a chassis for an automobile or variegated component materials for various electrical equipment. The synthetic rubber is also used in abundant quantities as tubing, hoses or as variegated shock-absorbing materials.

Recently, the yield of the products employing the above-mentioned resin materials is increasing and, in keeping pace therewith, the amount of waste materials derived from these materials tends to be increased, such that, in conjunction with the growing interest in the protection of the global environment, there is an increasing need for effective utilization of the waste materials derived from the above-mentioned resin materials.

Under such situation, the above-mentioned resin materials are expected to be re-used in a wider range of application, such that there is raised a demand for modification of the resin materials to higher added value products.

It is noted that the polymer-based waste materials are disposed of roughly by three types of techniques, namely land-filling, incineration and re-melting. Of these, land-filling and incineration account for approximately 90% of the total amount of disposal of the waste material, meaning that most of the waste material is not re-cycled.

As the method of recycling the polymer waste material, such a method of melting by heating and re-molding is routinely used, insofar as the thermoplastic resin is concerned. In this case, a lot of problems are presented, such as thermal deterioration (for example the lowering of the molecular weight or resin oxidation), admixture of foreign matter, such as dust and dirt, or admixture of resins containing various colorants which leads to the necessity of color matching. That is, in recycling polymer waste materials by heating or melting, processing techniques or costs pose serious bottlenecks.

### Disclosure of the Invention

It is an object of the present invention to provide a liquid electrolyte absorbing polymer which is inexpensive, high in safety and is capable of simultaneously absorbing plural sorts of the liquid electrolytes and which can be put to a wide range of usage, and a method for manufacturing the polymer.

It is another object of the present invention to provide a method for effectively utilizing a used water-insoluble polymer, obtained from e.g., a waste material of general-purpose plastics, for conversion to a high added-value product, and also to provided such high added-value product.

It is still another object of the present invention to provide a cell in which there is no risk of leakage or evaporation of the liquid electrolyte from the cell system and which has long shelf life, and a method for producing the cell..

It is still another object of the present invention to make effective utilization of the used water-insoluble polymer obtained from the waste general-purpose plastics material for conversion to high added-value products.

It is still another object of the present invention to provide a cell in which the polymer material containing acetonitrile on one hand and styrene and/or a conjugated diene on the other hand or its waste material may be effectively used as a material of a high added-value product.

It is a further object of the present invention to provide a cell precursor which is substantially free from deterioration in preservation and which in combination with a dielectric liquid may constitute a cell.

It is yet another object of the present invention to provide a method for preparation of a cell and a cell precursor which is able to make effective utilization of the polymer material containing acetonitrile on one hand and styrene and/or a conjugated diene on the other hand and acidic groups introduced thereto, or its waste material.

For accomplishing the above object, the present inventors have conducted eager researches, and succeeded in producing an electrolyte absorbing polymer exhibiting superior absorbency for various liquid electrolytes in a wide field of application, by introducing hydrophilic polar groups to water-insoluble polymer obtained from the general-purpose monomers, even if the water-insoluble polymer has been recovered form a waste material. The present inventors have also conducted further researches and arrived at the present invention.

That is, the present invention provides a liquid electrolyte absorbent polymer comprising a water-insoluble polymer into which hydrophilic polar groups have been introduced. The hydrophilic polar groups are at least one of hydrophilic polar groups selected from the group consisting of a sulfo group, which may be in the form of a salt, a sulfuric acid group, which may be in the form of a salt, a carboxylic, an amide or a nitro group, which may be in the form of a salt, a -PO(OH)₂ group, which may be in the form of a salt, a -OPO(OH)₂ group, which may be in the form of a salt, a hydroxy group, which may be in the form of a salt, and an aminic base, which may be in the form of a salt.

The amount of the hydrophilic polar groups is set to 0.1 to 99 mol% based on the total monomer units in the water-insoluble polymer.

The water-insoluble polymer includes at least one of an aromatic ring and a conjugated diene in its main chain and/or side chain.

At least one of the aromatic ring and the conjugated diene contained in the water-insoluble polymer accounts for 1 to 100 mol% based on the total monomer units in the water-insoluble polymer.

The present invention also provides a liquid electrolyte absorbent polymer comprising a used water-insoluble polymer into which hydrophilic polar groups have been introduced. The hydrophilic polar groups are at least one hydrophilic polar group selected from the group consisting of a sulfo group, which may be in the form of a salt, a sulfuric acid group, which may be in the form of a salt, a carboxylic, an amide or a nitro group, which may be in the form of a salt, a -PO(OH)₂ group, which may be in the form of a salt, a -OPO(OH)₂ group, which may be in the form of a salt, a hydroxy group, which may be in the form of a salt, and an aminic base, which may be in the form of a salt.

The amount of the hydrophilic polar groups is set to 0.1 to 99 mol% based on the total monomer units in the water-insoluble polymer.

The water-insoluble polymer includes at least one of an aromatic ring and a conjugated diene in its main chain and/or side chain.

At least one of the aromatic ring and the conjugated diene contained in the water-insoluble polymer accounts for 1 to 100 mol% based on the total monomer units in the water-insoluble polymer.

The present invention also provides a method for producing a liquid electrolyte absorbing polymer comprising introducing hydrophilic groups to a water-insoluble polymer. The hydrophilic groups are at least one hydrophilic group selected from the group consisting of a sulfo group, which may be in the form of a salt, a sulfuric acid group, which may be in the form of a salt, a carboxylic, an amide or a nitro group, which may be in the form of a salt, a -PO(OH)₂ group, which may be in the form of a salt, a -OPO(OH)₂ group, which may be in the form of a salt, a hydroxy group, which may be in the form of a salt, and an aminic base, which may be in the form of a salt.

The hydrophilic groups is 0.1 to 99 mol% based on the total monomer units in the water-insoluble polymer.

The water-insoluble polymer includes at least one of an aromatic ring and a conjugated diene in its main chain and/or side chain.

At least one of the aromatic ring and the conjugated diene contained in the water-insoluble polymer accounts for 1 to 100 mol% based on the total monomer units in the water-insoluble polymer.

The present invention also provides a method for producing a liquid electrolyte absorbent polymer comprising introducing hydrophilic groups into a waste water-insoluble polymer. The hydrophilic groups are at least one hydrophilic group selected from the group consisting of a sulfo group, which may be in the form of a salt, a sulfuric acid group, which may be in the form of a salt, a carboxylic, an amide or a nitro group, which may be in the form of a salt, a -PO(OH)₂ group, which may be in the form of a salt, a -OPO(OH)₂ group, which may be in the form of a salt, a hydroxy group, which may be in the form of a salt, and an aminic base, which may be in the form of a salt.

The amount of the hydrophilic groups is set to 0.1 to 99 mol% based on the total monomer units in the water-insoluble polymer.

The water-insoluble polymer includes at least one of an aromatic ring and a conjugated diene in its main chain and/or side chain.

At least one of the aromatic ring and the conjugated diene contained in the water-insoluble polymer accounts for 1 to 100 mol% based on the total monomer units in the water-insoluble polymer.

The present inventors have also succeeded in employing a polymer in a dried state, obtained by introducing hydrophilic polar groups into a water-insoluble polymer obtained in turn from a general-purpose monomer, and an electrolyte in a dried state, as constituent materials of a cell, to produce a cell which is free from leakage or vaporization of a liquid electrolyte from the cell system and which has a long shell life until use.

That is, the present invention provides a water-added cell comprising a water-insoluble polymer in dried state, into which hydrophilic polar groups have been introduced, and an electrolyte in dried state. The hydrophilic polar groups are at least one hydrophilic polar group selected from the the group consisting of a sulfo group, which may be in the form of a salt, a sulfuric acid group, which may be in the form of a salt, a carboxylic, an amide or a nitro group, which may be in the form of a salt, a - PO(OH)₂ group, which may be in the form of a salt, a -OPO(OH)₂ group, which may be in the form of a salt, a hydroxy group, which may be in the form of a salt, and an aminic base, which may be in the form of a salt.

The amount of the hydrophilic groups is 0.1 to 99 mol% based on the total monomer units in the water-insoluble polymer.

The water-insoluble polymer includes at least one of an aromatic ring and a conjugated diene in its main chain and/or side chain.

At least one of the aromatic ring and the conjugated diene contained in the water-insoluble polymer accounts for 1 to 100 mol % based on the total monomer units in the water-insoluble polymer.

The present invention provides a water-added cell comprising a used-up water-insoluble polymer in dried state, into which hydrophilic polar groups have been introduced, and an electrolyte in dried state. The hydrophilic polar groups are at least one hydrophilic polar group selected from the the group consisting of a sulfo group, which may be in the form of a salt, a sulfuric acid group, which may be in the form of a salt, a carboxylic, an amide or a nitro group, which may be in the form of a salt, a -PO(OH)₂ group, which may be in the form of a salt, a -OPO(OH)₂ group, which may be in the form of a salt, a hydroxy group, which may be in the form of a salt, and an aminic base, which may be in the form of a salt.

The amount of the hydrophilic groups is 0.1 to 99 mol% based on the total monomer units in the water-insoluble polymer.

The water-insoluble polymer includes at least one of an aromatic ring and a conjugated diene in its main chain and/or side chain.

At least one of the aromatic ring and the conjugated diene contained in the water-insoluble polymer accounts for 1 to 100 mol% based on the total monomer units in the water-insoluble polymer.

The present invention also provides a method for producing a water-added cell comprising combining a water-insoluble polymer in dried state, into which hydrophilic polar groups have been introduced, and an electrolyte in dried state. The hydrophilic polar groups are at least one hydrophilic polar group selected from the the group consisting of a sulfo group, which may be in the form of a salt, a sulfuric acid group, which may be in the form of a salt, a carboxylic, an amide or a nitro group, which may be in the form of a salt, a -PO(OH)₂ group, which may be in the form of a salt, a -OPO(OH)₂ group, which may be in the form of a salt, a hydroxy group, which may be in the form of a salt, and an aminic base, which may be in the form of a salt.

The amount of the hydrophilic groups is 0.1 to 99 mol% based on the total monomer units in the water-insoluble polymer.

The water-insoluble polymer includes at least one of an aromatic ring and a conjugated diene in its main chain and/or side chain.

At least one of the aromatic ring and the conjugated diene contained in the water-insoluble polymer accounts for 1 to 100 mol% based on the total monomer units in the water-insoluble polymer.

The present invention also provides a method for producing a water-added cell comprising a used-up water-insoluble polymer in dried state, into which hydrophilic polar groups have been introduced, and an electrolyte in dried state. The hydrophilic polar groups are at least one hydrophilic polar group selected from the the group consisting of a sulfo group, which may be in the form of a salt, a sulfuric acid group, which may be in the form of a salt, a carboxylic, an amide or a nitro group, which may be in the form of a salt, a -PO(OH)₂ group, which may be in the form of a salt, a -OPO(OH)₂ group, which may be in the form of a salt, a hydroxy group, which may be in the form of a salt, and an aminic base, which may be in the form of a salt.

The amount of the hydrophilic groups is 0.1 to 99 mol% based on the total monomer units in the water-insoluble polymer.

The water-insoluble polymer includes at least one of an aromatic ring and a conjugated diene in its main chain and/or side chain.

At least one of the aromatic ring and the conjugated diene contained in the water-insoluble polymer accounts for 1 to 100 mol % based on the total monomer units in the water-insoluble polymer.

The present invention also provides a method for producing a water-added cell comprising a used-up water-insoluble polymer in dried state, into which hydrophilic polar groups have been introduced, and an electrolyte in dried state. The hydrophilic polar groups are at least one hydrophilic polar group selected from the the group consisting of a sulfo group, which may be in the form of a salt, a sulfuric acid group, which may be in the form of a salt, a carboxylic, an amide or a nitro group, which may be in the form of a salt, a -PO(OH)₂ group, which may be in the form of a salt, a -OPO(OH)₂ group, which may be in the form of a salt, a hydroxy group, which may be in the form of a salt, and an aminic base, which may be in the form of a salt.

The amount of the hydrophilic groups is 0.1 to 99 mol% based on the total monomer units in the water-insoluble polymer.

The water-insoluble polymer includes at least one of an aromatic ring and a conjugated diene in its main chain and/or side chain.

At least one of the aromatic ring and the conjugated diene contained in the water-insoluble polymer accounts for 1 to 100 mol% based on the total monomer units in the water-insoluble polymer.

With the cell of the present invention, a cell precursor, comprised of a modified product comprised of a polymer material, preferably a used resin, containing preset amounts of acrylonitrile and at least one of styrene and/or a conjugated diene, as constituent units, and hydrophilic polar groups introduced thereto, a cathode and an anode, is combined with a dielectric liquid to generate an electromotive force.

That is, the cell precursor according to the present invention uses a polymer material, preferably a used resin, containing preset amounts of acrylonitrile and styrene or a conjugated diene, and acidic groups are introduced into at least the styrene part or to the conjugated diene part of the polymer material, to yield a hydrophilic gel, as a modified copolymer, which is optionally dehydrated and combined with a dielectric liquid to generate an electromotive force. In the cell of the present invention, the dielectric liquid is absorbed into the hydrophilic gel of the cell precursor to cause the hydrophilic gel to be swollen to serve as an electrolyte exhibiting ionic conductivity.

The method for producing the cell according to the present invention combines a modified copolymer, comprised of a polymer material, preferably a used resin, containing preset amounts of acrylonitrile and styrene or a conjugated diene, as constituent units, and of the acidic groups introduced thereto, with a dielectric liquid, a cathode and an anode.

In particular, the method for producing the cell according to the present invention processes a polymer material, preferably a used resin, containing preset amounts of acrylonitrile and styrene or a conjugated diene, as constituent units, with an acid to produce a modified copolymer, optionally dehydrates the modified copolymer, combines the resulting product with a cathode and an anode to produce a cell precursor and charges a dielectric liquid into the cell precursor to generate an electromotive force.

The present invention also provides a cell comprising a modified copolymer including a copolymer containing acrylonitrile and at least one of styrene and/or a conjugated diene, as constituent units, and also including acidic groups introduced to the copolymer, a dielectric liquid, a cathode and an anode.

The copolymer contains 5 to 80 mol% of the acrylonitrile unit.

The copolymer contains 20 to 95 mol% of the constituent unit of at least one of styrene and/or a conjugated diene.

The copolymer is at least one selected from the group consisting of an ABS (acrylonitrile-butadiene-styrene) resin, a SAN (styrene- acrylonitrile) resin and NBR (acrylonitrile- butadiene) rubber.

The copolymer further contains an inorganic pigment. Specifically, the inorganic pigment is carbon black and/or titanium oxide.

The inorganic pigment is contained in an amount of 0.01 to 5 wt% based on the weight (dry weight) of the copolymer.

The acidic group in the modified copolymer is at least one selected from the group consisting of a sulfo group, a -PO(OH)₂ and -CH₂PO(OH)₂.

The acidic group in the modified copolymer is a sulfo group.

The acidic group in the modified copolymer accounts for 5 to 95 mol% based on the total units in the modified copolymer.

The present invention also provides a cell comprising a modified copolymer including a used resin comprised of a copolymer containing acrylonitrile and at least one of styrene and/or a conjugated diene, as constituent units, the used resin having been molded for a specified usage, the modified copolymer also including acidic groups introduced to the copolymer, a dielectric liquid, a cathode and an anode.

The copolymer contains 5 to 80 mol% of the acrylonitrile unit.

The copolymer contains 20 to 95 mol% of the constituent unit of at least one of styrene and/or a conjugated diene.

The copolymer is at least one selected from the group consisting of an ABS (acrylonitrile-butadiene-styrene) resin, a SAN (styrene- acrylonitrile) resin and NBR (acrylonitrile- butadiene) rubber.

The copolymer further contains an inorganic pigment. Specifically, the inorganic pigment is carbon black and/or titanium oxide.

The inorganic pigment is contained in an amount of 0.01 to 5 wt% based on the weight (dry weight) of the copolymer.

The acidic group in the modified copolymer is at least one selected from the group consisting of a sulfo group, a -PO(OH)₂ and -CH₂PO(OH)₂.

The acidic group in the modified copolymer is a sulfo group.

The acidic group in the modified copolymer accounts for 5 to 95 mol% based on the total units in the modified copolymer.

The present invention also provides a cell precursor comprising a modified copolymer including a copolymer containing acrylonitrile and at least one of styrene and/or a conjugated diene, as constituent units, and also including acidic groups introduced to the copolymer, a cathode, and an anode.

The copolymer contains 5 to 80 mol% of the acrylonitrile unit.

The copolymer contains 20 to 95 mol% of the constituent unit of at least one of styrene and/or a conjugated diene.

The copolymer is at least one selected from the group consisting of an ABS (acrylonitrile-butadiene- styrene) resin, a SAN (styrene- acrylonitrile) resin and NBR (acrylonitrile- butadiene) rubber.

The copolymer further contains an inorganic pigment. Specifically, the inorganic pigment is carbon black and/or titanium oxide.

The inorganic pigment is contained in an amount of 0.01 to 5 wt% based on the weight (dry weight) of the copolymer. The acidic group in the modified copolymer is at least one selected from the group consisting of a sulfo group, a -PO(OH)₂ and - CH₂PO(OH)₂.

The acidic group in the modified copolymer is a sulfo group.

The acidic group in the modified copolymer accounts for 5 to 95 mol% based on the total units in the modified copolymer.

The present invention also provides a cell precursor comprising a modified copolymer including a used resin comprised of a copolymer containing acrylonitrile and at least one of styrene and/or a conjugated diene, as constituent units, the used resin having been molded for a specified usage, the modified copolymer also including acidic groups introduced to the copolymer, a cathode, and an anode.

The copolymer contains 5 to 80 mol% of the acrylonitrile unit.

The copolymer contains 20 to 95 mol% of the constituent unit of at least one of styrene and/or a conjugated diene.

The copolymer is at least one selected from the group consisting of an ABS (acrylonitrile-butadiene- styrene) resin, a SAN (styrene- acrylonitrile) resin and NBR (acrylonitrile- butadiene) rubber.

The copolymer further contains an inorganic pigment. Specifically, the inorganic pigment is carbon black and/or titanium oxide.

The inorganic pigment is contained in an amount of 0.01 to 5 wt% based on the weight (dry weight) of the copolymer.

The acidic group in the modified copolymer is at least one selected from the group consisting of a sulfo group, a -PO(OH)₂ and -CH₂PC(OH)₂.

The acidic group in the modified copolymer is a sulfo group.

The acidic group in the modified copolymer accounts for 5 to 95 mol% based on the total units in the modified copolymer.

The present invention also provides a method for producing a cell comprising combining a modified copolymer including a copolymer containing acrylonitrile and at least one of styrene and/or a conjugated diene, as constituent units, and also including acidic groups introduced to the copolymer, a dielectric liquid, cathode and an anode.

The copolymer contains 5 to 80 mol% of the acrylonitrile unit.

The copolymer contains 20 to 95 mol% of the constituent unit of at least one of styrene and/or a conjugated diene.

The copolymer is at least one selected from the group consisting of an ABS (acrylonitrile-butadiene-styrene) resin, a SAN (styrene- acrylonitrile) resin and NBR (acrylonitrile- butadiene) rubber.

The copolymer further contains an inorganic pigment. Specifically, the inorganic pigment is carbon black and/or titanium oxide.

The inorganic pigment is contained in an amount of 0.01 to 5 wt% based on the weight (dry weight) of the copolymer.

The acidic groups in the modified copolymer are introduced into the copolymer using at least one inorganic acid selected from the group consisting of concentrated sulfuric acid, sulfuric anhydride, fuming sulfuric acid, chlorosulfonic acid, phosphoric acid, phosphorus chloride and phosphorus oxide.

The acidic groups in the modified copolymer are introduced into the copolymer using concentrated sulfuric acid having the configuration not lower than 70 wt%.

The acidic groups in the modified copolymer are introduced into the copolymer by sequentially adding concentrated sulfuric acid and/or chlorosulfonic acid, sulfuric anhydride and/or fuming sulfuric acid.

The copolymer is in the form of small-sized pieces not larger than 3.5 mesh.

The present invention also provides a method for producing a cell comprising combining a modified copolymer including a used resin comprised of a copolymer containing acrylonitrile and at least one of styrene and/or a conjugated diene, as constituent units, the used resin having been molded for a specified usage, the modified copolymer also including acidic groups introduced to the copolymer, a dielectric liquid, a cathode and an anode.

The copolymer contains 5 to 80 mol% of the acrylonitrile unit.

The copolymer contains 20 to 95 mol % of the constituent unit of at least one of styrene and/or a conjugated diene.

The copolymer is at least one selected from the group consisting of an ABS (acrylonitrile-butadiene- styrene) resin, a SAN (styrene- acrylonitrile) resin and NBR (acrylonitrile- butadiene) rubber.

The copolymer further contains an inorganic pigment. Specifically, the inorganic pigment is carbon black and/or titanium oxide.

The inorganic pigment is contained in an amount of 0.01 to 5 wt% based on the weight (dry weight) of the copolymer.

The acidic groups in the modified copolymer are introduced into the copolymer using at least one inorganic acid selected from the group consisting of concentrated sulfuric acid, sulfuric anhydride, fuming sulfuric acid, chlorosulfonic acid, phosphoric acid, phosphorus chloride and phosphorus oxide.

The acidic groups in the modified copolymer are introduced into the copolymer using concentrated sulfuric acid having the configuration not lower than 70 wt%.

The acidic groups in the modified copolymer are introduced into the copolymer by sequentially adding concentrated sulfuric acid and/or chlorosulfonic acid, sulfuric anhydride and/or fuming sulfuric acid.

The copolymer is in the form of small-sized pieces not larger than 3.5 mesh.

Other objects, features and advantages of the present invention will become more apparent from reading the embodiments of the invention.

### Best Mode for Carrying out the Invention

The present invention is now explained with reference to certain preferred embodiments which are given only by way of illustration.

The liquid electrolyte absorbing polymer according to the present invention is usually manufactured by introducing hydrophilic groups to a water-insoluble polymer.

For manufacturing an inexpensive liquid electrolyte absorbing polymer with only a smaller amount of residual monomers, the present invention uses, as a feedstock, a water-insoluble polymer obtained from inexpensive general-purpose monomer. The water-insoluble polymer used in the present invention may be a water-insoluble polymer, in particular the water-insoluble polymer contained in a waste material. Specifically, the water-insoluble polymer may be enumerated by an ABS (acrylonitrile- butadiene- styrene) polymer, high impact polystyrene (HIPS), a styrene- butadiene elastomer (SBC), SAN (styrene- acrylonitrile) polymer, a polyacrylonitrile polymer (PAN), polyacrylonitrile- butadiene (nitrile rubber), polystyrene (PS), nylon polymer, polyolefin (such as polyethylene, polypropylene or polyisoprene) polymer, polyvinyl chloride (PVC), polyphenylene ether (PPE), polyphenylene sulfide (PPS), polycarbonate (PC), polyethylene terephthalate (PET), polybutylene terephthalate (PBT), polysulfone, polyallyl sulfone, polyether sulfone, polythioether sulfone, polyether ether ketone, polyamide (nylon), polyamideimide, polyimide, polyallylate, aromatic polyester, polyurethane, polyvinyl chloride, chlorinated polyether, polychloromethyl styrene, polyacrylate, polymethacrylate, celluloid, various liquid crystal polymers, methacryl polymmers (PMMA), amber polymer, terpene polymers, epoxy polymers, phenol formalin polymers, and melamine polymers. Of these, the water-insoluble polymers having aromatic diene rings or conjugated diene structures, that allow for facilitated introduction of hydrophilic polar groups as later explained, in the main and/or side chains thereof, are most preferred.

The content of the aromatic rings and/or conjugated diene units in the water-insoluble polymer is desirably about 1 to 100 mol% based on the weight of the total monomer units in the water-insoluble polymer. For evading the number of the hydrophilic polar groups introduced into the water-insoluble polymer becoming decreased to lower effect of absorbing the liquid electrolyte, the above content is desirably not less than about 1%.

Although there is no particular limitation to the molecular weight (Mw) of the water-insoluble polymer material, it is customarily about 1,000 to 20,000,000 and preferably about 10,000 to 1,000,000 in terms of weight averaged molecular weight Mw). If the molecular weight is higher than 1,000, the liquid electrolyte solution is completely dissolved to render it possible to evade the inconvenience that the state of the gel cannot be maintained following the absorption. The molecular weight lower than 20,000,000 is more practical in that hydrophilic groups can then be introduced more readily.

These water-insoluble polymers may be newly prepared unused resin particles (virgin pellets). Alternatively, these resin materials may also be used resins or waste resins, molded for specified usage or application. The waste materials may be ejects (odds and ends) of the resin feedstock or molded products from the production process, chassis already used in electrical equipment or automobiles, various component materials, tubes, hoses or various shock-absorbing materials. The used resins mean those resins recovered from the above waste materials. The waste materials in the present invention may be those from plants, selling stores or household. The waste materials recovered from plants or selling stores, such as rejects or odds and ends, are preferred to the waste materials recovered from the household, because the former waste materials are generally more uniform in composition.

The copolymer used in the present invention may be the above polymer material alloyed with other resins, or may be used or waste resins containing additives as known per se, such as face dyes, stabilizers, combustion retardants, plasticizers, fillers and other assistant agents. Alternatively, the copolymer may also be a mixture of the used or waste material with unused materials (virgin materials).

The present invention contemplates to introduce hydrophilicpolar groups to the aforementioned water-insoluble polymer for conversion to the liquid electrolyte absorbing polymer. It should be noted that the hydrophilic polar groups have the effect of improving absorbency with respect to the liquid electrolyte. On the other hand, the hydrophobic fraction in the water-insoluble polymer, mainly the main chain or the fraction to which neither aromatic rings nor hydrophilic polar groups have been introduced, has the effect of preventing the polymer from being dissolved in various electrolytic solutions.

The hydrophilic polar groups may be enumerated by polar groups, such as acidic or basic groups. The acidic or basic groups may also constitute a salt. As for specified examples of the hydrophilic polar groups, sulfo groups represented by the formula -SO₃M, and which may be in the form of a salt, where M is a hydrogen atom or a cation of metals, such as sodium or potassium, sulfuric acid groups represented by the formula -OSO₃M, and which may be in the form of a salt, where M has the same meaning as above, phospho groups, represented by the formula -PO(OM₁) (OM₂) or the formula -OPO(OM₁)OM₂), and which may be in the form of a salt, where M₁ and M₂ may be the same or different and have the same meaning as M, and hydroxy groups represented by the formula -OM₃, and which may be in the form of a salt, where M₃ has the same meaning as M, may be exemplified as acidic groups that may be in the form of salts. In addition, aminic bases, such as amino groups, secondary amino groups, such as methylamino groups, tertiary amino groups, such as dimethylamino groups, for example, quaternary ammonium groups, such as trimethyl ammonium chloride groups, may be exemplified as basic groups that may be in the form of a salt. Moreover, amide or nitro groups may also be used.

For introducing sulfo groups, which may be in the form of salts, to the water-insoluble polymer, a water-insoluble polymer, desirably containing an aromatic ring, is reacted with sulfonating agents, such as sulfuric anhydride, fuming sulfuric acid or chlorosulfonating agents, such as chlorosulfonic acid, or the polymer is dissolved or dispersed in an organic solvent, to introduce sulfo groups to the polymer. The resulting product then is neutralized with a basic compound, such as sodium hydroxide or potassium hydroxide, for conversion to a sulfonate. Meanwhile, the reaction temperature in introducing the sulfo groups is generally in the order of approximately 0°C to 200°C, preferably approximately 30°C to 120°C, although the temperature varies appreciably depending on whether or not an organic solvent is used. If the reaction temperature is approximately 0°C or higher, the reaction rate is sufficiently high and a liquid electrolyte absorbing polymer having more desirable properties may be produced. If the reaction temperature is not higher than approximately 200°C, molecular chains in the polymer are not prone to disruption, while the polymer is hardly soluble in water or in solvents. The reaction time is generally 1 minute to 40 hours, preferably five minutes to two hours, although the reaction time is varied appreciably with the reaction temperature. Under this condition, the reaction may proceed sufficiently with an optimum production efficiency.

For introducing sulfuric acid groups, that may be in the form of a salt, a water-insoluble polymer, preferably having an unsaturated bond, is reacted with a hot aqueous solution of sulfuric acid, to introduce the sulfuric acid groups, and subsequently the resulting product is reacted with a basic compound, such as sodium hydroxide or potassium hydroxide, to form a sulfate.

For introducing carboxylic groups, that may be in the form of salts, n-butyl lithium is added to a water-insoluble polymer, preferably containing aromatic groups, and the resulting product is reacted with dry ice, to introduce carboxylic groups. The resulting product then is reacted with a basic compound, for example, sodium hydroxide or potassium hydroxide, to form a carboxylate.

For introducing amide groups, a water-insoluble polymer, containing nitro groups, may be hydrolyzed with heated concentrated sulfuric acid, or heated alkali, such as an aqueous solution of sodium hydroxide or of potassium hydroxide.

For introducing nitro groups, a water-insoluble polymer preferably having an aromatic ring may be reacted with fuming nitric acid or a liquid mixture of nitric acid and sulfuric acid.

For introducing a -PO(OH)₂ group that may be in the form of a salt, phosphorus trichloride may be added to a water-insoluble polymer desirably containing an aromatic ring, and the resulting product then is hydrolyzed to introduce the -PO(OH)₂ group. The resulting product then is reacted with a basic compound, such as sodium hydroxide or potassium hydroxide, to form a corresponding salt.

For introducing a -OPO(OH)₂ group, that may be in the form of a salt, phosphorus trichloride may be added to a water-insoluble polymer desirably containing an unsaturated bond, and the resulting product then is hydrolyzed to introduce the -OPO(OH)₂ group. The resulting product then is reacted with a basic compound, such as sodium hydroxide or potassium hydroxide, to form a corresponding salt.

For introducing a hydroxy group that may be in the form of a salt, a water-insoluble polymer desirably containing an unsaturated bond is reacted with an aqueous solution of sulfuric acid to enable hydroxy groups to be introduced. The resulting product then is reacted with a basic compound, such as sodium hydroxide or potassium hydroxide, to form a corresponding salt.

For introducing tertiary and/or quaternary aminic base, a water-insoluble polymer desirably containing an unsaturated bond is subjected to a Friedel-Kraft reaction for chloromethylation, followed by reaction with ammonia or a variety of amine compounds to introduce tertiary or quaternary amine salts as ionic groups. In introducing primary or secondary amino groups or converting these amino groups into corresponding salts, any known method may be used.

Meanwhile, hydrophilicpolar group introducing agents or basic compounds may be virgin products, waste liquids discharged from plants, or recycled products. In the perspective of effective utilization of resources, it is more desirable to use the waste liquid as the feedstock of the liquid electrolyte absorbing polymers.

Only one of these hydrophilic polar groups may be introduced, while a plurality of the hydrophilic polar groups may also be introduced in combination. The amount of these hydrophilic polar groups introduced to the water-insoluble polymer is desirably about 0.1 to 99 mol% based on the weight of the units in the polymer. This range is preferred in order to suppress dissolution in water of the polymer following introduction of the hydrophilic polar groups, and in order to assure optimum absorbency into the liquid electrolyte.

There is no particular limitation to the liquid electrolyte and may be practically any liquid electrolyte used in plants or laboratories, such as sodium hydroxide, sodium chloride, copper sulfide or sulfuric acid.

The liquid electrolyte absorbing polymer, obtained by the above-described method, may further be treated by methods as known per se. By way of a desirable embodiment, reaction products, which are usually gelated products, obtained by the above-described reaction of introducing hydrophilic polar groups, may preferably be filtered, washed with water, dried or dehydrated to produce a polymer having a superior performance in absorbing variegated liquid electrolytes.

The liquid electrolyte absorbing polymer according to the present invention may also be prepared by polymerizing a monomer, to the main chain and/or to the side chain of which the above-mentioned hydrophilic polar groups have been introduced, by means as known per se.

The liquid electrolyte absorbing polymer of the present invention may further be admixed with other ingredients, such as a conventional liquid electrolyte absorbing polymer, for example, a liquid electrolyte absorbing polymer obtained on polymerizing an cross-linkable monomer, stabilizers, humidifiers or curing type adhesives.

It is possible to produce a polymer, capable of absorbing various liquid electrolytes to a high concentration by introducing the hydrophilic polar groups into the water-insoluble polymer, by any arbitrary method, preferably in accordance with the above-described method. Consequently, the liquid electrolyte absorbing polymer according to the present invention is useful as a processing agent for a liquid electrolyte discharged from a plant producing an electric cell or a chemical plating plant an emergency, or as an emergency processing agent for such a case in which a liquid electrolyte has leaked from a tank which stores the liquid electrolyte of a plant. Moreover, since the inventive liquid electrolyte absorbing polymer, which has absorbed the liquid electrolyte, is electrically conductive, the inventive liquid electrolyte absorbing polymer may be used not only as a feedstock for preparing the cell, but also as a switch orb as a sensor.

As liquid electrolyte absorbing polymer according to the present invention, samples of Examples 1 to 5 were prepared and evaluated, only by way of illustration.

### Example 1

A crushed product (sieved to the size of 16 to 32 mesh) of the commercially available SAN polymer (composition: 73 mol% of styrene and 27 mol% of acrylonitrile) was reacted for thirty minutes with 96 wt% of sulfuric acid heated to 100°C. After the end of the reaction, the gelated product in the system was filtered by a glass filter, washed with water and again filtered. The resulting product was dried at 115°C for two hours in an air flow circulating type drier. From the results of the elementary analysis of sulfur, sulfonic acid groups were found to account for 42 mol% in the total monomer units. From the measured results of FT-IR, it was found that nitrile groups in the polymer have been converted into amide groups.

### Example 2

The processing was carried out in the same way as in Example 1 except reacting the commercially available ABS polymer (composition: 65 mol% of styrene, 25 mol% of acrylonitrile and 10 mol% of butadiene), passed through a sieve of 16 to 32 mesh, with 90 mol% of 100°C sulfuric acid for thirty minutes. From the results of the elementary analysis of sulfur, sulfonic acid groups in the product were found to account for 48 mol% in the total monomer units. From the measured results of FT-IR, it was found that nitrile groups in the polymer have been converted into amide groups.

### Example 3

A transparent portion of a used-up 8 mm video cassette, formed of a SAN polymer (composition: 60 mol% of styrene and 40 mol% of acrylonitrile), crushed to a size of 16 to 32 mesh, was reacted under the same condition as in Example 1. From the results of the elementary analysis of sulfur, sulfonic acid groups in the product were found to account for 37 mol% in the total monomer units. From the measured results of FT-IR, it was found that nitrile groups in the polymer have been converted into amide groups.

### Example 4

A black-colored portion of a used-up 8 mm video cassette, formed of an ABS polymer (composition: 48 mol% of styrene, 39 mol% of acrylonitrile and 13 mol% of butadiene), crushed to a size of 16 to 32 mesh, was reacted at 100°C for thirty minutes with 88 wt% of waste sulfuric acid recovered from the semiconductor plant following use for rinsing the semiconductor. After the end of the reaction, the gelated product in the system was filtered through a glass filter and neutralized with a waste liquid of sodium hydroxide recovered from a semiconductor plant after use for regenerating an ion exchange polymer. The resulting product was washed with water and filtered. The filtered product was dried in an air circulating type drier at 115°C for two hours. From the results of the elementary analysis of sulfur, sulfonic acid groups in the product were found to account for 40 mol% in the total monomer units. From the measured results of FT-IR, it was found that nitrile groups in the polymer have been converted into amide groups.

### Example 5

A used-up rubber hose (composition: 22 mol% of acrylonitrile and 78 mol% of butadiene), frozen and crushed to a size of 16 to 32 mesh, was reacted with 88 wt% of waste sulfuric acid, recovered from the semiconductor plant after use for rinsing the semiconductor, at 100°C for thirty minutes. After the end of the reaction, the gelated product in the system was filtered through a glass filter, washed with water and again filtered. The resulting filtered product was dried in an air circulating type drier at 115°C for two hours. From the results of the elementary analysis of sulfur, sulfonic acid groups in the product were found to account for 23 mol% in the total monomer units. From the measured results of FT-IR, it was found that nitrile groups in the polymer have been converted into amide groups.

### Comparative Example

The liquid electrolyte absorbing performance of the products, obtained by the above processing, was compared to that of the commercially available water-absorbing polymer (highly absorbent polymer of the sodium polyacrylate cross-linked type).

Each sample was of a unified particle size of 200 to 65 mesh, and was immersed in a large quantity of one of various liquid electrolytes at room temperature for thirty minutes. After the immersion, the weight of each sample was measured to compare the absorbency from the equation of absorption factor = sample weight (g) after immersion/ sample weight (g) before absorption. The results are shown in the following Table 1.

**Table 1**

| | factor of absorption (g/g) | | | | | |
|---|---|---|---|---|---|---|
| | Ex.1 | Ex.2 | Ex.3 | Ex.4 | Ex.5 | water-absorbent polymer |
| 4% NaOH | 71 | 58 | 37 | 41 | 32 | 18 |
| 10% NaOH | 34 | 25 | 20 | 18 | 15 | 18 |
| 1% H₂SO₄ | 86 | 51 | 42 | 39 | 36 | 8 |
| 10% H₂SO₄ | 36 | 25 | 19 | 17 | 15 | 6 |
| 97% H₂SO₄ | 29 | 25 | 18 | 15 | 14 | 11 |
| 1% NaCl | 61 | 49 | 42 | 40 | 37 | 31 |
| 10% NaCl | 46 | 26 | 30 | 19 | 19 | 11 |
| 1% CuCl₂ | 41 | 48 | 32 | 29 | 28 | 2 |
| 10% CuCl₂ | 23 | 19 | 17 | 16 | 15 | 1 |

From the results of Table 1 it may be seen that the polymer obtained in accordance with the present invention is superior in absorbency of the liquid electrolyte.

According to the present invention, a polymer having excellent liquid electrolyte absorbency may be prepared. Since this liquid electrolyte absorbent polymer may be produced from a used-up general-purpose polymer or a waste liquid (waste sulfuric acid), it is possible to utilize resources effectively to contribute to protection of global environment.

According to the present invention, a dried polymer comprised of a water-insoluble polymer with hydrophilic polar groups introduced therein is used as one of starting materials.

Specifically, this polymer may be enumerated by ABS (acrylonitrile-butadiene-styrene) polymer, high impact polystyrene (HIPS) a styrene- butadiene elastomer (SBC), a SAN (styrene- acrylonitrile) polymer, a polyacrylonitrile polymer (PAN), a polyacrylonitrile- butadiene (nitrile rubber), polystyrene (PS), nylon polymer, polyolefin, such as polyethylene, polypropylene or polyisoprene polymer, polyvinyl chloride (PVC), polyphenylene ether (PPE), polyphenylene sulfide (PPS), polycarbonate (PC), polyethylene terephthalate (PET), polybutylene terephthalate (PBT), polysulfone, polyallyl sulfone, polyether sulfone, polythioether sulfone, polyether ketone, polyamide (nylon), polyamideimide, polyimide, polyallylate, aromatic polyester, polyurethane, polyvinyl chloride, chlorinated polyether, polychloromethyl styrene, polyacrylate, polymethacrylate, celluloid, various liquid crystal polymers, methacryl polymers (PMMA), amber polymers, terpene polymers, epoxy polymers, phenol formalin polymers, and melamine polymers. Of these, the water-insoluble polymers having aromatic diene rings or conjugated diene structures, that allow for facilitated introduction of hydrophilic polar groups as later explained, in the main and/or side chains thereof, are most preferred.

The content of the aromatic rings and/or conjugated diene units in the water-insoluble polymer is desirably about 1 to 100 mol% based on the weight of the total monomer units in the water-insoluble polymer. For evading the number of the hydrophilic polar groups introduced into the water-insoluble polymer becoming decreased to lower effect of absorbing the liquid electrolyte, the above content is desirably not less than about 1%.

Although there is no particular limitation to the molecular weight (Mw) of the water-insoluble polymer material, it is customarily about 1,000 to 20,000,000 and preferably about 10,000 to 1,000,000 in terms of weight averaged molecular weight Mw). If the molecular weight is higher than 1,000, the liquid electrolyte solution is completely dissolved to render it possible to evade the inconvenience that the state of the gel cannot be maintained following the absorption. The molecular weight lower than 20,000,000 is practically more desirable in that hydrophilic groups can then be introduced more readily.

These water-insoluble polymers may be newly prepared unused resin particles (virgin pellets). Alternatively, these resin materials may also be used resins or waste resins, molded for specified usage or application. The waste materials may be ejects (odds and ends) of the resin feedstock or molded products from the production process, chassis already used in electrical equipment or automobiles, various component materials, tubes, hoses or various shock-absorbing materials. The used resins mean those resins recovered from the above waste materials. The waste materials in the present invention may be those from plants, selling stores or household. The waste materials recovered from plants or selling stores, such as rejects or odds and ends, are preferred to the waste materials recovered from the household, because the former waste materials are generally more uniform in composition.

The copolymer used in the present invention may be the above polymer material alloyed with other resins, or may be used or waste resins containing additives as known per se, such as face dyes, stabilizers, combustion retardants, plasticizers, fillers, curing adhesives or other assistant agents. Alternatively, the copolymer may also be a mixture of the used or waste material with an unused material (virgin material).

The present invention contemplates to introduce hydrophilic polar groups to the aforementioned water-insoluble polymer for conversion to the liquid electrolyte absorbing polymer. It should be noted that the hydrophilic polar groups have the effect of improving absorbency with respect to the liquid electrolyte. On the other hand, the hydrophobic fraction in the water-insoluble polymer, mainly the main chain or a fraction to which neither aromatic rings nor hydrophilic polar groups have been introduced, has the effect of preventing the polymer from being dissolved in various electrolytic solutions.

The hydrophilic polar groups may be enumerated by polar groups, such as acidic or basic groups. The acidic or basic groups may also constitute a salt. As for specified examples of the hydrophilic polar groups, sulfo groups represented by the formula -SO₃M, and which may be in the form of a salt, where M is a hydrogen atom or a cation of metals, such as sodium or potassium, sulfuric acid groups represented by the formula -OSO₃M, and which may be in the form of a salt, where M has the same meaning as above, phospho groups, represented by the formula -PO(OM₁) (OM₂) or the formula -OPO(OM₁)(OM₂), and which may be in the form of a salt, where M₁ and M₂ may be the same or different and have the same meaning as M, and hydroxy groups represented by the formula -OM₃, and which may be in the form of a salt, where M₃ has the same meaning as M, may be exemplified as acidic groups that may be in the form of salts. In addition, aminic bases, such as amino groups, secondary amino groups, such as methylamino groups, tertiary amino groups, such as dimethylamino groups, for example, quaternary ammonium groups, such as trimethyl ammonium chloride groups, that may be in the form of salts, may be exemplified as basic groups that may be in the form of a salt. Moreover, amide or nitro groups may also be used.

For introducing sulfo groups, which are or are not in the form of salts, to the water-insoluble polymer, a water-insoluble polymer, desirably containing an aromatic ring, is directly reacted with sulfonating agents, such as sulfuric anhydride, fuming sulfuric acid or chlorosulfonating agents, such as chlorosulfonic acid, or the polymer is dissolved or dispersed in an organic solvent, to introduce sulfo groups to the polymer. The resulting product then is neutralized with a basic compound, such as sodium hydroxide or potassium hydroxide, for conversion to a sulfonate. Meanwhile, the reaction temperature in introducing the sulfo groups is generally on the order of approximately 0°C to 200°C, preferably approximately 30°C to 120°C, although the temperature varies appreciably depending on whether or not an organic solvent is used.

If the reaction temperature is approximately 0°C or higher, the reaction rate is sufficiently high and a liquid electrolyte absorbing polymer having more desirable properties may be produced. If the reaction temperature is not higher than approximately 200°C, molecular chains in the polymer are not prone to disruption, while the polymer is hardly soluble in water or in solvents. The reaction time is generally 1 minute to 40 hours, preferably five minutes to two hours, although the reaction time is varied appreciably with the reaction temperature. Under this condition, the reaction may proceed sufficiently with an optimum production efficiency.

For introducing sulfuric acid groups, that may be in the form of a salt, a water-insoluble polymer, preferably having an unsaturated bond, is reacted with a hot aqueous solution of sulfuric acid, to introduce the sulfuric acid groups, and subsequently the resulting product is reacted with a basic compound, such as sodium hydroxide or potassium hydroxide, to form a sulfate.

For introducing carboxylic groups, that may be in the form of salts, n-butyl lithium is added to a water-insoluble polymer, preferably containing aromatic groups, and the resulting product is reacted with dry ice, to introduce carboxylic groups. The resulting product then is reacted with a basic compound, for example, sodium hydroxide or potassium hydroxide, to form a carboxylate.

For introducing amide groups, a water-insoluble polymer, containing nitro groups, may be hydrolyzed with heated concentrated sulfuric acid, or heated alkali, such as a heated aqueous solution of sodium hydroxide or of potassium hydroxide.

For introducing nitro groups, a water-insoluble polymer preferably having an aromatic ring may be reacted with fuming nitric acid or a liquid mixture of nitric acid and sulfuric acid.

For introducing a -PO(OH)₂ group that may be in the form of a salt, phosphorus trichloride may be added to a water-insoluble polymer desirably containing an aromatic ring, and the resulting product then is hydrolyzed to introduce the -PO(OH)₂ group. The resulting product then is reacted with a basic compound, such as sodium hydroxide or potassium hydroxide, to form a corresponding salt.

For introducing a -OPO(OH)₂ group, that may be in the form of a salt, phosphorus trichloride may be added to a water-insoluble polymer desirably containing an unsaturated bond, and the resulting product then is hydrolyzed to introduce the - OPO(OH)₂ group. The resulting product then is reacted with a basic compound, such as sodium hydroxide or potassium hydroxide, to form a corresponding salt.

For introducing a hydroxy group that may be in the form of a salt, a water-insoluble polymer desirably containing an unsaturated bond is reacted with an aqueous solution of sulfuric acid to enable hydroxy groups to be introduced. The resulting product then is reacted with a basic compound, such as sodium hydroxide or potassium hydroxide, to form a corresponding salt.

For introducing tertiary and/or quaternary aminic base, a water-insoluble polymer desirably containing an aromatic ring is subjected to a Friedel-Kraft reaction for chloromethylation, followed by reaction with ammonia or a variety of amine compounds to introduce tertiary or quaternary amine salts as ionic groups. In introducing primary or secondary amino groups or converting these amino groups into corresponding salts, any known method may be used.

Meanwhile, hydrophilic polar group introducing agents or basic compounds may be virgin products, waste liquids discharged from plants, or recycled products. In the perspective of effective utilization of resources, it is more desirable to use the waste liquid as the feedstock of the liquid electrolyte absorbing polymers.

Only one of these hydrophilic polar groups may be introduced, while a plurality of the hydrophilic polar groups may also be introduced in combination. The amount of the hydrophilic polar groups introduced to the water-insoluble polymer is desirably about 0.1 to 99 mol% based on the weight of the units in the polymer. This range is preferred in order to suppress dissolution in water of the polymer following introduction of the hydrophilic polar groups, and in order to assure optimum absorbency into the liquid electrolyte.

There is no particular limitation to the liquid electrolyte and may be practically any liquid electrolyte used in plants or laboratories, such as sodium hydroxide, sodium chloride, copper sulfide or sulfuric acid.

The liquid electrolyte absorbing polymer, obtained by the above-described method, may further be treated by methods as known per se. By way of a desirable embodiment, reaction products, which are usually gelated products, obtained by the above-described reaction of introducing hydrophilic polar groups, may preferably be filtered, washed with water, and dried or dehydrated to produce a polymer having a superior performance in absorbing variegated liquid electrolytes.

The liquid electrolyte absorbing polymer according to the present invention may also be prepared by a method in which a monomer, to the main chain and/or to the side chain of which the above-mentioned hydrophilic polar groups have been introduced, is polymerized by means as known per se.

The liquid electrolyte absorbing polymer of the present invention may further be admixed with other ingredients, such as a conventional liquid electrolyte absorbing polymer, for example, a liquid electrolyte absorbing polymer obtained on polymerizing a cross linkable monomer, a stabilizer, a humidifier or a curing type adhesive.

It is possible to produce a polymer, capable of absorbing various liquid electrolytes to a high concentration, by introducing the hydrophilic polar groups into the water-insoluble polymer, by any arbitrary method, preferably in accordance with the above-described method.

The dried electrolyte, used in the present invention, may be any of various inorganic salts, organic salts, such as sulfates, for example, sulfuric acid alkali metal salts, sulfuric acid alkali earth metal salts or copper sulfate, hydro chlorates, nitrates, phosphates, carbonates, fluorite, ammonium salts, various amine salts, acetates, formats or mixtures thereof.

When both the dried polymer comprised of the water-insoluble polymer and hydrophilic polar groups introduced thereto and the dried electrolyte are contained as constituent units in the cell, the electrolyte is turned into a liquid electrolyte, on addition of water, while the polymer absorbs the liquid electrolyte to generate the electrolyte gel. Thus, if electrodes different in ionization tendency are present in the electrolyte gel, current flows across these electrodes. That is, the dried polymer, dried electrolyte and the electrolytes are present until addition of water, so that there is no risk of the liquid electrolyte leaking or vaporizing from the system, nor of the electrodes becoming attacked. In actuality, an electromotive force may be produced on addition of water only when a cell is necessitated.

By the above technique, it is possible to produce a cell having a prolonged shelf life until time of use and in which there is no risk of leakage or vaporization of the liquid electrolyte to outside the system.

As the cells of the present invention, samples of Examples 1 to 5 and the Comparative Example were prepared and evaluated. These Examples are given only by way of illustration and are not intended to limit the scope of the invention.

### Example 6

A commercially available SAN polymer (composed of 73 mol% of styrene and 27 mol% of acrylonitrile), crushed to a particle size of 16 to 32 mesh, was reacted with 96 wt% of heated sulfuric acid at 100°C for thirty minutes. After the end of the reaction, the gelated product in the system was filtered through a glass filter, washed with water and again filtered. The resulting filtered product was dried in an air circulating type drier at 115°C for two hours. From the results of the elementary analysis of sulfur, sulfonic acid groups in the product were found to account for 42 mol% in the total monomer units. From the measured results of FT-IR, it was found that nitrile groups in the polymer have been converted into amide groups. The dried product was immersed in a 1% aqueous solution of table salt for thirty minutes. The water-immersed gel was again dried at 115°C for two hours.

### Example 7

The method of Example 1 was followed except reacting the commercially available ABS polymer (composed of 65 mol% of styrene, 25 mol% of acrylonitrile and 10 mol% of butadiene), crushed to a size of 16 to 32 mesh, with hot sulfuric acid at 100°C for thirty minutes. From the results of the elementary analysis of sulfur, sulfonic acid groups in the product were found to account for 48 mol% in the total monomer units. From the measured results of FT-IR, it was found that nitrile groups in the polymer have been converted into amide groups. The dried product was immersed in a 1% aqueous solution of copper chloride for thirty minutes. The water-immersed gel was again dried at 115°C for two hours.

### Example 8

A transparent portion of a used-up 8 mm video cassette, formed of a SAN polymer (60 mol% of styrene and 40 mol% of acrylonitrile), crushed to a size of 16 to 32 mesh, was reacted under the same condition as in Example 1. From the results of the elementary analysis of sulfur, sulfonic acid groups in the product were found to account for 37 mol% in the total monomer units. From the measured results of FT-IR, it was found that nitrile groups in the polymer have been converted into amide groups. The dried product was immersed in a 1% aqueous solution of sodium sulfate for thirty minutes. The water-immersed gel was again dried at 115°C for two hours.

### Example 9

A black-colored portion of a used-up 8 mm video cassette, formed of an ABS polymer ( 48 mol% of styrene, 39 mol% of acrylonitrile and 13 mol% of butadiene), crushed to a size of 16 to 32 mesh, was reacted at 100°C for thirty minutes with 88 wt% of waste sulfuric acid recovered from the semiconductor plant following use for rinsing the semiconductor. After the end of the reaction, the gelated product in the system was filtered through a glass filter and neutralized with a waste liquid of sodium hydroxide recovered from a semiconductor plant after use for regenerating an ion exchange polymer. The resulting product was washed with water and filtered. The filtered product was dried in an air circulating type drier at 115°C for two hours. From the measured results of FT-IR, it was found that sulfonic acid groups in the product account for 40 mol% in the total monomer units. From the measured results of FT-IR, it was found that nitrile groups in the polymer have been converted into amide groups. The dried product was immersed in a 1% aqueous solution of copper chloride for thirty minutes. The water-immersed gel was again dried at 115°C for two hours.

### Example 10

Instead of immersion in a 10% aqueous solution of copper chloride, 5 wt% of powders of sodium sulfate were mixed to the polymer.

### Comparative Example

A polymer not admixed with sodium sulfate in Example 5 was used in the Comparative Example.

The powders obtained in the above processing were charged into a vessel , along with zinc and copper electrodes, for use as a cell. The electromotive force when water is added to the present cell was checked in a tester. The results are shown in the following Table 2:

**Table 2**

| | Ex.6 | Ex.7 | Ex.8 | Ex.9 | Ex.10 | Comp.Ex. |
|---|---|---|---|---|---|---|
| Voltage (V) | 1.0 | 1.0 | 1.0 | 1.0 | 1.0 | 1.0 |
| Current (mA) | 30 | 70 | 40 | 150 | 50 | 5 |

It is seen from the above results that the product of the present invention is superior as cell.

By application of the present invention , it is possible to produce a cell having a prolonged shelf life until time of use and in which there is no risk of leakage or vaporization of the liquid electrolyte to outside the system. Moreover, since the present cell can be prepared even from the used-up general-purpose polymer or the waste liquid (such as waste sulfuric acid), it contributes to effective utilization of resources and to protection of the global environment.

A cell precursor of the present invention can be produced by introducing acidic groups to a copolymer preferably containing acrylonitrile on one hand and at least one of styrene and/or a conjugated diene on the other hand, as constituent units, to obtain a modified copolymer in the state of a hydrophilic gel, drying the modified copolymer and arranging the dried modified copolymer between a cathode and an anode. The cell of the present invention is prepared by preferably adding an inductive liquid to the modified copolymer as the cell precursor to generate the electromotive force.

The content in the copolymer of acrylonitrile unit is about 5 mol% or more, preferably about 10 mol% or more and more preferably about 20 mol% or more, in order that, when the copolymer is processed with an acid, the resulting modified copolymer will be handled readily without becoming substantially soluble in water. In addition, the content of acrylonitrile units in the copolymer is about 80 mol% or less, preferably about 60 mol% or less and more preferably about 50 mol% or less, in order to evade the copolymer becoming hardened, in order to facilitate crushing the copolymer into small-sized pieces in the production process of the water-immersed switch, in order to evade the content in the copolymer of styrene and/or conjugated diene units or the rate of introduction of acidic groups being decreased and in order for the modified copolymer to manifest the effect as the electrolyte effectively.

It is desirable for the comonomer used in the present invention to contain at least one of styrene and/or a conjugated diene, such as butadiene or isoprene, as a constituent unit other than acrylonitrile, in an amount of about 20 to 95 mol%, preferably about 40 to 85 mol% and more preferably about 50 to 80 mol%.

The content in the comonomer of the above constituent unit is about 95 mol% or less, preferably about 85 mol% or less and more preferably about 80 mol% or less, in order that, in processing the copolymer with an acid, the resulting modified copolymer can be handled readily without becoming substantially water-soluble. In addition, the content of the above constituent unit in the copolymer is about 20 mol% or more, preferably about 40 mol% or more and more preferably about 50 mol% or more, in order to evade the copolymer becoming hardened, in order to facilitate crushing the copolymer into small-sized pieces in the production process of the water-immersed switch, in order to evade the rate of introduction of acidic groups being decreased and in order for the modified copolymer to manifest the effect as the electrolyte effectively.

It is possible for other constituent units to be contained in the copolymer used in the present invention, provided that preset amounts of acrylonitrile and styrene and/or a conjugated diene are contained in the copolymer.

These other constituent units may, for example, maleic anhydride, itaconic anhydride, α-methylstyrene, acrylamide, methacrylamide, acrylic acid, acrylates, methacrylic acid, methacrylate, vinyl acetate, vinyl chloride, ethylene, propylene, butylene, vinyl pyrrolidone or vinylpyridine, only by way of examples. Meanwhile, the acrylates and methacrylates are desirably those having 1 to 10 carbon atoms and may be saturated or unsaturated.

The weight average molecular weight (Mw) of the copolymer used in the present invention is routinely about 1,000 to 20,000,000 and preferably about 10,000 to 1,000,000.

The weight average molecular weight (Mw) is preferably about 1,000 or more and more preferably about 10,000 or more, in order that the resulting modified copolymer will be the desired gelated electrolyte without being substantially water-soluble. Moreover, for achieving an efficient reaction of acid processing for introducing acidic groups to the copolymer, for shortening the reaction time and for increasing the density of acidic groups introduced, the weight average molecular weight (Mw) is preferably about 20,000,000 or less, more preferably about 1,000,000 or less.

As the copolymer used in the present invention, it is desirable to use polymer materials, such as, for example, ABS (acrylonitrile- butadiene- styrene) resin, SAN (styrene- acrylonitrile) resin, ASA (acrylonitrile- styrene- acrylamide) resin, ACS (acrylonitrile-chlorinated polystyrene- styrene) resin, AAS (acrylonitrile- acrylatestyrene) resin, or NBR (acrylonitrile- butadiene) rubber. These resin materials may be newly prepared unused resin particles (virgin pellets). Alternatively, these resin materials may also be used resins or waste resins, molded for specified usage or application. The waste materials may be ejects (odds and ends) of the resin feedstock or molded products from the production process chassis already used in electrical equipment or automobiles, various component materials, tubes, hoses or various shock-absorbing materials. The used resins mean those resins recovered from the above waste materials. The waste materials in the present invention may be those from plants, selling stores or household. The waste materials recovered from plants or selling stores, such as rejects or odds and ends, are preferred to the waste materials recovered from the household, because the former waste materials are generally more uniform in composition.

The copolymer used in the present invention may be the above polymer material alloyed with other resins, or may be used or waste resins containing additives as known per se, such as face dyes, stabilizers, combustion retardants, plasticizers, fillers and other assistant agents. Alternatively, the copolymer may also be a mixture of the used or waste material with unused materials (virgin materials).

The other resins that can be mixed with the above-mentioned polymer materials in the above alloyed product may be those resins that are known per se. However, these other resins are preferably those that do not obstruct acid processing of the present invention. These resins may specifically be exemplified by, for example polyphenylene ether, polycarbonates, polyphenylene sulfide, polyethylene terephthalate, polybutylene terephthalate, polyamide or polyester. The mixing amount of these resins is preferably about 60 wt% or less based on the weight of the polymer material. This range is preferred in order to raise the density of the acidic groups in forming acidic groups in acidic processing and in order for the modified copolymer to manifest the properties as the electrolyte effectively.

The copolymer used in the present invention is preferably in the form of small-sized pieces for convenience in acidic processing used for introducing acidic groups. Among the methods for processing the copolymer into small-sized pieces, there are following methods, which are given only by way of examples. That is, there is such a method consisting in finely dividing the copolymer by a crusher or pulverizer and in subsequently sieving the finely divided copolymer. In particular, if the copolymer contains rubber components, it is desirable to effect crushing following freezing. There is also such a method consisting in melting the copolymer under heating and in subsequently pelletizing (forming into particles) the resulting product to micro-sized beads.

The size of the small-sized pieces of the copolymer is preferably about 3.5 mesh or less. This size range is desirable for increasing the surface area of the reaction product, assisting in the acid processing reaction, shortening the reaction time, increasing the density of the acidic groups and for effectively demonstrating the performance of the modified copolymer as the electrolyte.

If further an inorganic substance is contained in the copolymer of the present invention, acidic processing for introducing the acidic groups is accelerated, that is, an inorganic pigment and its neighboring portion are more prone to acid processing, more specifically, the inorganic pigment is more prone to be disengaged from the copolymer during the reaction from the copolymer, with the acid being more prone to be permeated into the surface area of the copolymer. Consequently, an inorganic material is preferably contained in the copolymer of the present invention.

This inorganic material is preferably carbon black and/or titanium oxide, which may be those routinely used as colorants, reinforcing agents or electrifying agents for plastics. Specifically, the carbon black may be one prepared by any one of a channeling method, a furnace method or a thermal method, which may be used singly or in combination. Meanwhile, the mean particle size is usually about 5 to 500 µm and preferably about 10 to 50 µm. As for titanium oxide, it may be of the rutile type, anatase type, or ultra-small-sized particulate titanium. These different types of titanium oxide may be used singly or in combination. Meanwhile, the mean particle size is usually about 0.01 to 50 µm and preferably about 0.05 to 10 µm.

The content of the carbon black or titanium oxide contained in the copolymer is on the order of about 0.01 to 5 wt% and preferably on the order of about 0.05 to 3 wt% based on the dry weight of the copolymer.

The modified copolymer, comprised of the above-mentioned copolymer, to which acidic groups are introduced, as discussed above, is one of the constituent units of the cell and the cell precursor of the present invention.

Among the methods of introducing acidic groups into the copolymer, there is, for example, a method of processing the copolymer with an acid. Such acid processing of the copolymer effectuates conversion to a water-absorbent gel electrolyte. Specifically, analyses of the copolymer modified by the above-mentioned acid processing indicate that part of acrylonitrile in the copolymer is turned into an amide, and that acidic groups are introduced into styrene and the conjugated diene.

As the acids used for the above-described acid processing, inorganic acids, that are able to introduce acidic groups into styrene or the conjugated diene, are preferred. The inorganic acids may be exemplified by sulfonating agents, such as concentrated sulfuric acid, sulfuric anhydride, fuming sulfuric acid or chlorosulfonic acid, nitric acid, fuming nitric acid, phosphoric acid, phosphorus chloride and phosphorus oxide. Of these, concentrated sulfuric acid, sulfuric anhydride, fuming sulfuric acid and chlorosulfonic acid are preferred. In particular, concentrated sulfuric acid, with a configuration of the order of 70 wt% or higher, is most preferred.

These inorganic acids may be used single or in combination. In the latter case, the inorganic acids may be mixed together at the outset or added sequentially. For example, a hydrophilic gel electrolyte exhibiting shape stability in an aqueous system may be obtained by initially processing the copolymer with concentrated sulfuric acid and adding sulfuric anhydride to the reaction system. The reason is that processing with concentrated sulfuric acid mainly hydrolyzes the nitrile fraction of the copolymer and subsequent processing with sulfuric anhydride compulsorily cross-links the styrene or conjugated diene fraction thereof with sulfone to yield a gel with a high crosslinking degree. Consequently, the above acid processing represents one of the desirable acid processing modes in the present invention.

The amount of inorganic acids used in the reaction (charge) is on the order of approximately 1 to 500 and preferably approximately 10 to 200 times the weight of the copolymer.

For raising the rate of introduction of acidic groups to the styrene or conjugated diene or the rate of hydrolytic reaction of the acrylonitrile groups for thereby promoting generation of the acidic groups and affording hydrophilicity to the copolymer, the amount of charge of the inorganic acid is preferably on the order of approximately one and more preferably on the order of approximately ten times the weight of the copolymer. In the perspective of economic advantage and workability, the charge of the inorganic acid is not higher than about 500 times and preferably not higher than about 200 times the weight of the copolymer.

Although the acid processing of the present invention may be carried out in an inorganic acid, it may also be carried out in a system employing an organic acid.

The organic acid usable in the acid processing may be enumerated by, for example, aliphatic halogenated hydrocarbons, with 1 to 2 carbon atoms (preferably 1,2- dichloroethane, chloroform, dichloromethane or 1,1- dichloroethane), aliphatic cyclic hydrocarbons (preferably cyclohexane, methylcyclohexane or cyclopentane), nitromethane, nitrobenzene, sulfur dioxide, paraffinic hydrocarbons (preferably with 1 to 7 carbon atoms), acetonitrile, carbon disulfide, tetrahydrofuran, tetrahydropyran, 1,2-dimethoxyethane, acetone, methylethylketone and thiophene. Of these, aliphatic halogenated hydrocarbons, with 1 to 2 carbon atoms, aliphatic cyclic hydrocarbons, nitromethane, nitrobenzene and sulfur dioxide are preferred. These may be used singly or in combination. In a mixed solvent, there is no limitation to the mixing ratio.

These organic solvents are preferably used in amounts less than about 200 times the weight of the copolymer. This range is preferred for raising the reactivity of acid processing and in view of economic advantages.

If desired, Louis bases may also be used in the acid processing. Examples of the Louis bases include alkyl phosphates, dioxane, acetic anhydride, ethyl acetate, ethyl palmitate, diethylether and thioxane. As the alkyl phosphates, triethyl phosphate or trimethyl phosphate, for example, may be used.

It is noted that the inorganic acid or organic solvent, once used for the above acid processing, may be recovered after the reaction and directly used, or may be recovered by sampling or distillation and re-used for the reaction.

According to the present invention, acid processing of the copolymer introduces acidic groups to the styrene and/or the conjugated diene, while acrylonitrile is turned into an amide by a hydrolytic reaction and modified to a hydrophilic resin to yield a hydrophilic gel electrolyte.

The acidic group introduced into the unit of styrene or the conjugated diene may be exemplifiedby sulfo group [-SO₃H],-PO(OH)₂ and -CH₂PO(OH)₂. Of these acidic groups, the sulfo group is preferred. Only one of the acidic groups or plural acidic groups may be introduced into the copolymer. For satisfying the properties of the hydrophilic gel electrolyte, used in the water-immersed electrical switch of the present invention, the amount of acidic groups contained in the modified copolymer is to be about 5 to 95 mol% and preferably 10 to 70 mol% based on the total weight of the respective units. In order for the modified copolymer not to manifest water-solubility substantially and in order to provide a gel exhibiting shape stability, the amount of acidic groups contained in the modified copolymer is to be about 95 mol% or less and preferably about 70 mol% or less based on the total weight of the respective units. In order to raise the rate of introduction of the acidic groups, in order to afford hydrophilicity and ionic characteristics to the modified copolymer and in order for the modified copolymer to operate. effectively as the hydrophilic gel electrolyte, the amount of acidic groups contained in the modified copolymer is to be about 5 mol% or more and preferably about 10 mol% or more based on the total weight of the respective units.

If the acidic groups in the modified copolymer are sulfo groups, the copolymer may be reacted in situ or in a solvent with the aforementioned sulfonating agents, as known per se, for example, concentrated sulfuric acid, sulfuric anhydride, fuming sulfuric acid or chlorosulfuric acid to introduce sulfo groups to the copolymer. If the acidic groups in the modified copolymer is -PO(OH)₂ groups, the acidic group may be introduced into the copolymer by addition of phosphorus trioxide to the solvent followed by hydrolysis.

For introducing the preset amount of the acidic group to the copolymer, the aforementioned acid processing reaction in the present invention is preferably carried out under the following conditions:

The reaction temperature is generally on the order of 0 to 200°C and preferably on the order of 30 to 120°C, although it differs appreciably depending on whether or not an organic solvent is used. For raising the reaction speed to some extent from the practical viewpoint, and for achieving a modified copolymer as the water-absorbent resin exhibiting optimum performance, the reaction temperature is preferably about 0°C or higher and more preferably about 30°C or higher. In order to evade such a situation in which molecular chains of the copolymer are broken on pyrolysis and in which the modified copolymer becomes soluble in water, the reaction temperature is preferably about 200°C or lower and preferably about 120°C or lower.

The acid processing reaction time is generally 1 minute to 40 hours and preferably about five minutes to two hours, although it may vary significantly with the reaction temperature. This range is preferred in order for the reaction to proceed sufficiently and in order to raise the production efficiency.

If desired, organic or inorganic salts or hydroxides may further be added to the modified copolymer according to the present invention. These organic or inorganic salts or hydroxides may be enumerated by, for example ammonium, and compounds, exemplified by hydroxides, carbonates, acetates, sulfates, phosphates or salts of organic acids of alkali metals, such as sodium, lithium or potassium, alkali earth metals, such as magnesium or calcium, and other metals, such as aluminum, titanium, germanium, tin, iron, zinc, copper, indium, gallium, silicon, zirconium, nickel, cobalt, vanadium, silver, manganese or bismuth. Examples of the organic acids include citric acid, lactic acid, amino acid, e.g., glutamic acid or aspartic acid, alginic acid, malic acid and gluconic acid.

It is possible for the modified copolymer to contain metallic or non-metallic ions. Although these ions may form a salt with the acidic groups of the modified copolymer, it is also possible to add isolated salts having isolated acidic groups different than the acidic groups.

The modified copolymer, obtained as described above, is in the form of a gel. The modified copolymer is then preferably dehydrated or dried by exposure to sunbeam, heating, pressure reduction, centrifugation or press-working.

The cell precursor of the present invention is made up by the modified copolymer, which is the water-absorbent gel electrolyte, obtained on the acid processing, optionally followed by dehydration, and by the cathode and the anode. The cathode and the anode, used in the present invention, are constituted by optionally using those metallic compounds, such as metals, alloys, metal oxides, hydrous metal oxide or metal halogenides, which are relatively noble, as a cathode, while optionally using those metallic compounds, such as metals, alloys, metal oxides, hydrous metal oxide or metal halogenides, which are relatively base, as an anode. The metals may be those known per se and routinely used in the related circles, and may be exemplified by, for example, zinc, aluminum, magnesium, iron, tin, copper, silver and platinum. Although these electrodes may sometimes become active materials, there are occasions where hydrogen or oxygen is an active material and is a reaction system generating or generated by hydrogen, hydroxy or oxygen ions. An redox cycle of ions having plural valencies may also be used.

The cell precursor and the dielectric liquid are combined to arrive at a cell according to the present invention. As a desirable mode of the cell according to the present invention, there may be such a cell in which a cathode and an anode of the above metal or metal compounds are mounted facing each other in a vessel, the modified copolymer, optionally dehydrated, is present in the facing portions of the cathode and the anode and the dielectric liquid is poured therein to cause the modified copolymer to be swollen to establish electrical connection across the facing electrodes by electrical conductivity by ionic conduction.

There is no particular limitation to the dielectric liquid used in the present invention provided that the liquid used exhibits inductivity. Specified examples of the dielectric liquid include distilled water, alcohols, such as methanol or ethanol, to say nothing of liquid electrolytes, or mixtures thereof. In particular, liquids mainly composed of water are preferably employed.

In the cell of the present invention, outputs or other characteristics of the cell are not lowered until such time electrically conductive state is established by ionic conduction across the cathode and the anode by the modified copolymer becoming swollen on charging the dielectric liquid. That is, the feature of the cell of the present invention resides in that, if preserved as a cell precursor according to the present invention, the cell scarcely undergoes deterioration during the time of preservation. Such cell is useful as a power supply for a portable electronic equipment that is finding widespread use, in particular as a backup or emergency power supply.

As inventive cells, cells of Examples 11 and 12 were tentatively prepared and evaluated. These Examples are, however, not intended to limit the scope of the invention.

### Example 11

1 part by weight of a waste SAN (styrene- acrylonitrile) resin was added to 30 parts by weight of 96 wt% of concentrated sulfuric acid for reaction at 80°C for 20 minutes. As the waste SAN resin material, the resin used in a transparent portion of a guard panel of an 8mm cassette tape guide, containing 60 mol% of styrene and 40 mol% of acrylonitrile, and crushed by a shredder to a size of 16 to 32 mesh, was used.

After the end of the reaction, the solid content in the system was filtered through a glass filter and washed with water. The resulting product was dried at 105°C for two hours in an air circulating drier. From the results of the elementary analysis of sulfur, the sulfo groups in the solid content were found to account for 36 mol% in the entire monomer units.

0.5 g of the above dried substance was charged into a cell of synthetic resin with an inner size of 20x50x10 mm. Plate-shaped electrodes of copper and zinc, each 15x60 mm in size, were placed facing each other in the cell. Into this cell, water was charged. The dried substance was swollen with water, with the swollen gelated substance filling the space between the electrodes to exhibit ionic conduction. Such cell of the present invention showed a release voltage of 1.05 V and a shorting current of 35 mA.

### Example 12

3.5 parts by weight of a waste material of an ABS (acrylonitrile- butadienestyrene) resin were charged into 90 parts by weight of 96 wt% concentrated sulfuric acid for reaction at 60°C for 60 minutes. 0.5 part by weight of fuming sulfuric acid, containing 60 wt% of SO₃, was further added for reaction for further 30 minutes. As the waste ABS resin material, the resin used in a transparent portion of a casing of a personal computer, containing 48 mol% of styrene, 39 mol% of acrylonitrile and 13 mol% of butadiene, and further containing 1 wt% of titanium oxide, crushed by a freezing shredder to a size of 16 to 32 mesh, was used.

After the end of the reaction, the solid content in the system was washed with water and filtered. The resulting product was dried for two hours in a drier. By this processing, a white-colored solid substance was obtained. The sulfo groups in this solid substance accounted for 42 mol% in the entire monomer units.

As in Example 11, 0.5 g of the above dried substance was charged into a cell of synthetic resin, with an inner size of 20x50x10 mm, and plate-shaped electrodes of iron and zinc, each 15x60 mm in size, were placed facing each other in the cell. Into this cell was charged water. The dried substance was swollen with water, with the swollen gelated substance filling the space between the electrodes to exhibit ionic conduction. The cell of the present invention showed a release voltage of 0.45 V and a shorting current of 55 mA.

### Industrial Applicability

The water-absorbent gel electrolyte of the cell and the cell precursor, according to the present invention, can be manufactured even from used-up resin, contributes to efficacious utilization of resources and to protection of global environment.

The cell of the present invention, that can be manufactured even from waste materials, uses a cell precursor and, in use of the cell, the dielectric liquid, with the cell precursor exhibiting superior preservation properties, and hence is useful as a power supply for a portable electronic equipment that has come into widespread use, in particular as a backup power supply in case of an emergency. Since the present invention enables adaptation of the polymer waste material to a high added-value material, it is possible to promote recycling of the waste material which is produced in increasing quantities.

## Claims

1. A liquid electrolyte absorbent polymer comprising a water-insoluble polymer into which hydrophilic polar groups have been introduced.

2. The liquid electrolyte absorbent polymer according to claim 1 wherein the hydrophilic polar groups are at least one of hydrophilic polar groups selected from the group consisting of a sulfo group, which may be in the form of a salt, a sulfuric acid group, which may be in the form of a salt, a carboxylic, an amide or a nitro group, which may be in the form of a salt, a -PO(OH)₂ group, which may be in the form of a salt, a -OPO(OH)₂ group, which may be in the form of a salt, a hydroxy group, which may be in the form of a salt, and an aminic base, which may be in the form of a salt.

3. The liquid electrolyte absorbent polymer according to claim 1 wherein the amount of the hydrophilic polar groups is 0.1 to 99 mol% based on the total monomer units in the water-insoluble polymer.

4. The liquid electrolyte absorbent polymer according to claim 1 wherein the water-insoluble polymer includes at least one of an aromatic ring and a conjugated diene in its main chain and/or side chain.

5. The liquid electrolyte absorbent polymer according to claim 4 wherein at least one of the aromatic ring and the conjugated diene contained in the water-insoluble polymer accounts for 1 to 100 mol% based on the total monomer units in the water-insoluble polymer.

6. A liquid electrolyte absorbent polymer comprising a used water-insoluble polymer into which hydrophilic polar groups have been introduced.

7. The liquid electrolyte absorbent polymer according to claim 6 wherein the hydrophilic polar groups are at least one hydrophilic polar group selected from the group consisting of a sulfo group, which may be in the form of a salt, a sulfuric acid group, which may be in the form of a salt, a carboxylic, an amide or a nitro group, which may be in the form of a salt, a -PO(OH)₂ group, which may be in the form of a salt, a -OPO(OH)₂ group, which may be in the form of a salt, a hydroxy group, which may be in the form of a salt, and an aminic base, which may be in the form of a salt.

8. The liquid electrolyte absorbent polymer according to claim 6 wherein the amount of the hydrophilic polar groups is 0.1 to 99 mol% based on the total monomer units in the water-insoluble polymer.

9. The liquid electrolyte absorbent polymer according to claim 6 wherein the water-insoluble polymer includes at least one of an aromatic ring and a conjugated diene in its main chain and/or side chain.

10. The liquid electrolyte absorbent polymer according to claim 9 wherein at least one of the aromatic ring and the conjugated diene contained in the water-insoluble polymer accounts for 1 to 100 mol% based on the total monomer units in the water-insoluble polymer.

11. A method for producing a liquid electrolyte absorbing polymer comprising introducing hydrophilic groups to a water-insoluble polymer.

12. The method for producing a liquid electrolyte absorbent polymer according to claim 11 wherein the hydrophilic groups are at least one hydrophilic group selected from the group consisting of a sulfo group, which may be in the form of a salt, a sulfuric acid group, which may be in the form of a salt, a carboxylic, an amide or a nitro group, which may be in the form of a salt, a -PO(OH)₂ group, which may be in the form of a salt, a -OPO(OH)₂ group, which may be in the form of a salt, a hydroxy group, which may be in the form of a salt, and an aminic base, which may be in the form of a salt.

13. The method for producing a liquid electrolyte absorbent polymer according to claim 11 wherein the amount of the hydrophilic groups is 0.1 to 99 mol% based on the total monomer units in the water-insoluble polymer.

14. The method for producing a liquid electrolyte absorbent polymer according to claim 11 wherein the water-insoluble polymer includes at least one of an aromatic ring and a conjugated diene in its main chain and/or side chain.

15. The method for producing a liquid electrolyte absorbent polymer according to claim 14 wherein at least one of the aromatic ring and the conjugated diene contained in the water-insoluble polymer accounts for 1 to 100 mol% based on the total monomer units in the water-insoluble polymer.

16. A method for producing a liquid electrolyte absorbent polymer comprising introducing hydrophilic groups into a waste water-insoluble polymer.

17. The method for producing a liquid electrolyte absorbent polymer according to claim 16 wherein the hydrophilic groups are at least one hydrophilic group selected from the group consisting of a sulfo group, which may be in the form of a salt, a sulfuric acid group, which may be in the form of a salt, a carboxylic, an amide or a nitro group, which may be in the form of a salt, a -PO(OH)₂ group, which may be in the form of a salt, a -OPO(OH)₂ group, which may be in the form of a salt, a hydroxy group, which may be in the form of a salt, and an aminic base, which may be in the form of a salt.

18. The method for producing a liquid electrolyte absorbent polymer according to claim 16 wherein the amount of the hydrophilic groups is 0.1 to 99 mol% based on the total monomer units in the water-insoluble polymer.

19. The method for producing a liquid electrolyte absorbent polymer according to claim 16 wherein the water-insoluble polymer includes at least one of an aromatic ring and a conjugated diene in its main. chain and/or side chain.

20. The method for producing a liquid electrolyte absorbent polymer according to claim 19 wherein at least one of the aromatic ring and the conjugated diene contained in the water-insoluble polymer accounts for 1 to 100 mol% based on the total monomer units in the water-insoluble polymer.

21. A water-insoluble polymer into which hydrophilic groups have been introduced.

22. A water-added cell comprising a water-insoluble polymer in dried state, into which hydrophilic polar groups have been introduced, and an electrolyte in dried state.

23. The water-added cell according to claim 22 wherein the hydrophilic polar groups are at least one hydrophilic polar group selected from the the group consisting of a sulfo group, which may be in the form of a salt, a sulfuric acid group, which may be in the form of a salt, a carboxylic, an amide or a nitro group, which may be in the form of a salt, a -PO(OH)₂ group, which may be in the form of a salt, a -OPO(OH)₂ group, which may be in the form of a salt, a hydroxy group, which may be in the form of a salt, and an aminic base, which may be in the form of a salt.

24. The water-added cell according to claim 22 wherein the amount of the hydrophilic groups is 0.1 to 99 mol% based on the total monomer units in the water-insoluble polymer.

25. The water-added cell according to claim 22 wherein the water-insoluble polymer includes at least one of an aromatic ring and a conjugated diene in its main chain and/or side chain.

26. The water-added cell according to claim 25 wherein at least one of the aromatic ring and the conjugated diene contained in the water-insoluble polymer accounts for 1 to 100 mol% based on the total monomer units in the water-insoluble polymer.

27. A water-added cell comprising a used-up water-insoluble polymer in dried state, into which hydrophilic polar groups have been introduced, and an electrolyte in dried state.

28. A method for producing a water-added cell comprising combining a water-insoluble polymer in dried state, into which hydrophilic polar groups have been introduced, and an electrolyte in dried state.

29. The method for producing a water-added cell according to claim 28 wherein the hydrophilic polar groups are at least ono hydrophilic polar group selected from the the group consisting of a sulfo group, which may be in the form of a salt, a sulfuric acid group, which may be in the form of a salt, a carboxylic, an amide or a nitro group, which may be in the form of a salt, a -PO(OH)₂ group, which may be in the form of a salt, a -OPO(OH)₂ group, which may be in the form of a salt, a hydroxy group, which may be in the form of a salt, and an aminic base, which may be in the form of a salt.

30. The water-added cell according to claim 28 wherein the amount of the hydrophilic groups is 0.1 to 99 mol% based on the total monomer units in the water-insoluble polymer.

31. The water-added cell according to claim 28 wherein the water-insoluble polymer includes at least one of an aromatic ring and a conjugated diene in its main chain and/or side chain.

32. The water-added cell according to claim 31 wherein at least one of the aromatic ring and the conjugated diene contained in the water-insoluble polymer accounts for 1 to 100 mol% based on the total monomer units in the water-insoluble polymer.

33. A method for producing a water-added cell comprising a used-up water-insoluble polymer in dried state, into which hydrophilic polar groups have been introduced, and an electrolyte in dried state.

34. A cell comprising:
a modified copolymer including a copolymer containing acrylonitrile and at least one of styrene and/or a conjugated diene, as constituent units, and also including acidic groups introduced to the copolymer;
a dielectric liquid;
a cathode; and
an anode.

35. The cell according to claim 34 wherein the copolymer contains 5 to 80 mol% of the acrylonitrile unit.

36. The cell according to claim 34 wherein the copolymer contains 20 to 95 mol% of the constituent unit of at least one of styrene and/or a conjugated diene.

37. The cell according to claim 34 wherein the copolymer is at least one selected from the group consisting of an ABS (acrylonitrile- butadiene- styrene) resin, a SAN (styrene- acrylonitrile) resin and NBR (acrylonitrile- butadiene) rubber.

38. The cell according to claim 34 wherein the copolymer further contains an inorganic pigment.

39. The cell according to claim 38 wherein the inorganic pigment is carbon black and/or titanium oxide.

40. The cell according to claim 38 wherein the inorganic pigment is contained in an amount of 0.01 to 5 wt% based on the weight (dry weight) of the copolymer.

41. The cell according to claim 34 wherein the acidic group in the modified copolymer is at least one selected from the group consisting of a sulfo group, a -PO(OH)₂ and -CH₂PO(OH)₂.

42. The cell according to claim 34 wherein the acidic group in the modified copolymer is a sulfo group.

43. The cell according to claim 34 wherein the acidic group in the modified copolymer accounts for 5 to 95 mol% based on the total units in the modified copolymer.

44. A cell comprising:
a modified copolymer including a used resin comprised of a copolymer containing acrylonitrile and at least one of styrene and/or a conjugated diene, as constituent units, the used resin having been molded for a specified usage, said modified copolymer also including acidic groups introduced to said copolymer;
a dielectric liquid;
a cathode; and
an anode.

45. The cell according to claim 44 wherein the copolymer contains 5 to 80 mol% of the acrylonitrile unit.

46. The cell according to claim 44 wherein the copolymer contains 20 to 95 mol% of the constituent unit of at least one of styrene and/or a conjugated diene.

47. The cell according to claim 44 wherein the copolymer is at least one selected from the group consisting of an ABS (acrylonitrile- butadiene- styrene) resin, a SAN (styrene- acrylonitrile) resin and NBR (acrylonitrile- butadiene) rubber.

48. The cell according to claim 44 wherein the copolymer further contains an inorganic pigment.

49. The cell according to claim 48 wherein the inorganic pigment is carbon black and/or titanium oxide.

50. The cell according to claim 48 wherein the inorganic pigment is contained in an amount of 0.01 to 5 wt% based on the weight (dry weight) of the copolymer.

51. The cell according to claim 48 wherein the acidic group in the modified copolymer is at least one selected from the group consisting of a sulfo group, a -PO(OH)₂ and -CH₂PO(OH)₂.

52. The cell according to claim 48 wherein the acidic group in the modified copolymer is a sulfo group.

53. The cell according to claim 48 wherein the acidic group in the modified copolymer accounts for 5 to 95 mol% based on the total units in the modified copolymer.

54. A cell precursor comprising:
a modified copolymer including a copolymer containing acrylonitrile and at least one of styrene and/or a conjugated diene, as constituent units, and also including acidic groups introduced to said copolymer;
a cathode; and
an anode.

55. The cell precursor according to claim 54 wherein the copolymer contains 5 to 80 mol% of the acrylonitrile unit.

56. The cell precursor according to claim 54 wherein the copolymer contains 20 to 95 mol% of the constituent unit of at least one of styrene and/or a conjugated diene.

57. The cell precursor according to claim 54 wherein the copolymer is at least one selected from the group consisting of an ABS (acrylonitrile-butadiene- styrene) resin, a SAN (styrene- acrylonitrile) resin and NBR (acrylonitrile-butadiene) rubber.

58. The cell precursor according to claim 54 wherein the copolymer further contains an inorganic pigment.

59. The cell precursor according to claim 58 wherein the inorganic pigment is carbon black and/or titanium oxide.

60. The cell precursor according to claim 58 wherein the inorganic pigment is contained in an amount of 0.01 to 5 wt% based on the weight (dry weight) of the copolymer.

61. The cell precursor according to claim 54 wherein the acidic group in the modified copolymer is at least one selected from the group consisting of a sulfo group, a -PO(OH)₂ and -CH₂PO(OH)₂.

62. The cell precursor according to claim 54 wherein the acidic group in the modified copolymer is a sulfo group.

63. The cell precursor according to claim 54 wherein the acidic group in the modified copolymer accounts for 5 to 95 mol% based on the total units in the modified copolymer.

64. A cell precursor comprising:
a modified copolymer including a used resin comprised of a copolymer containing acrylonitrile and at least one of styrene and/or a conjugated diene, as constituent units, said used resin having been molded for a specified usage, said modified copolymer also including acidic groups introduced to said copolymer;
a cathode; and
an anode.

65. The cell precursor according to claim 64 wherein the copolymer contains 5 to 80 mol% of the acrylonitrile unit.

66. The cell precursor according to claim 64 wherein the copolymer contains 20 to 95 mol% of the constituent unit of at least one of styrene and/or a conjugated diene.

67. The cell precursor according to claim 64 wherein the copolymer is at least one selected from the group consisting of an ABS (acrylonitrile-butadiene- styrene) resin, a SAN (styrene- acrylonitrile) resin and NBR (acrylonitrile- butadiene) rubber.

68. The cell precursor according to claim 64 wherein the copolymer further contains an inorganic pigment.

69. The cell precursor according to claim 68 wherein the inorganic pigment is carbon black and/or titanium oxide.

70. The cell precursor according to claim 68 wherein the inorganic pigment is contained in an amount of 0.01 to 5 wt% based on the weight (dry weight) of the copolymer.

71. The cell precursor according to claim 64 wherein the acidic group in the modified copolymer is at least one selected from the group consisting of a sulfo group, a -PO(OH)₂ and -CH₂PO(OH)₂.

72. The cell precursor according to claim 64 wherein the acidic group in the modified copolymer is a sulfo group.

73. The cell precursor according to claim 64 wherein the acidic group in the modified copolymer accounts for 5 to 95 mol% based on the total units in the modified copolymer.

74. A method for producing a cell comprising:
combining a modified copolymer including a copolymer containing acrylonitrile and at least one of styrene and/or a conjugated diene, as constituent units, and also including acidic groups introduced to said copolymer;
a dielectric liquid;
a cathode; and
an anode.

75. The method for producing a cell according to claim 74 wherein the copolymer contains 5 to 80 mol% of the acrylonitrile unit.

76. The method for producing a cell according to claim 74 wherein the copolymer contains 20 to 95 mol% of the constituent unit of at least one of styrene and/or a conjugated diene.

77. The method for producing a cell according to claim 74 wherein the copolymer is at least one selected from the group consisting of an ABS (acrylonitrile- butadienestyrene) resin, a SAN (styrene- acrylonitrile) resin and NBR (acrylonitrile-butadiene) rubber.

78. The method for producing a cell according to claim 74 wherein the copolymer further contains an inorganic pigment.

79. The method for producing a cell according to claim 78 wherein the inorganic pigment is carbon black and/or titanium oxide.

80. The method for producing a cell according to claim 78 wherein the inorganic pigment is contained in an amount of 0.01 to 5 wt% based on the weight (dry weight) of the copolymer.

81. The method for producing a cell according to claim 74 wherein the acidic groups in the modified copolymer are introduced into the copolymer using at least one inorganic acid selected from the group consisting of concentrated sulfuric acid, sulfuric anhydride, fuming sulfuric acid, chlorosulfonic acid, phosphoric acid, phosphorus chloride and phosphorus oxide.

82. The method for producing a cell according to claim 74 wherein the acidic groups in the modified copolymer are introduced into the copolymer using concentrated sulfuric acid having the configuration not lower than 70 wt%.

83. The method for producing a cell according to claim 74 wherein the acidic groups in the modified copolymer are introduced into the copolymer by sequentially adding concentrated sulfuric acid and/or chlorosulfonic acid, sulfuric anhydride and/or fuming sulfuric acid.

84. The method for producing a cell according to claim 74 wherein the copolymer is in the form of small-sized pieces not larger than 3.5 mesh.

85. A method for producing a cell comprising combining
a modified copolymer including a used resin comprised of a copolymer containing acrylonitrile and at least one of styrene and/or a conjugated diene, as constituent units, said used resin having been molded for a specified usage, said modified copolymer also including acidic groups introduced to said copolymer;
a dielectric liquid;
a cathode; and
an anode.

86. The method for producing a cell according to claim 85 wherein the copolymer contains 5 to 80 mol% of the acrylonitrile unit.

87. The method for producing a cell according to claim 85 wherein the copolymer contains 20 to 95. mol% of the constituent unit of at least one of styrene and/or a conjugated diene.

88. The method for producing a cell according to claim 85 wherein the copolymer is at least one selected from the group consisting of an ABS (acrylonitrile- butadienestyrene) resin, a SAN (styrene- acrylonitrile) resin and NBR (acrylonitrile-butadiene) rubber.

89. The method for producing a cell according to claim 85 wherein the copolymer further contains an inorganic pigment.

90. The method for producing a cell according to claim 89 wherein the inorganic pigment is carbon black and/or titanium oxide.

91. The method for producing a cell according to claim 89 wherein the inorganic pigment is contained in an amount of 0.01 to 5 wt% based on the weight (dry weight) of the copolymer.

92. The method for producing a cell according to claim 85 wherein the acidic groups in the modified copolymer are introduced into the copolymer using at least one inorganic acid selected from the group consisting of concentrated sulfuric acid, sulfuric anhydride, fuming sulfuric acid, chlorosulfonic acid, phosphoric acid, phosphorus chloride and phosphorus oxide.

93. The method for producing a cell according to claim 85 wherein the acidic groups in the modified copolymer are introduced into the copolymer using concentrated sulfuric acid having the configuration not lower than 70 wt%.

94. The method for producing a cell according to claim 85 wherein the acidic groups in the modified copolymer are introduced into the copolymer by sequentially adding concentrated sulfuric acid and/or chlorosulfonic acid, sulfuric anhydride and/or fuming sulfuric acid.

95. The method for producing a cell according to claim 85 wherein the copolymer is in the form of small-sized pieces not larger than 3.5 mesh.
